# EUROPÄISCHE PATENTSCHRIFT

(11) **EP 0 601 391 B1**
(45) Veröffentlichungstag und Bekanntmachung des Hinweises auf die Patenterteilung: **07.02.1996**
(21) Anmeldenummer: 93118937.7
(22) Anmeldetag: 24.11.1993
(51) Int. Cl.: C03C 3/06

(54) **Dotiertes Quarzglas und daraus hergestellte Gegenstände**
Doped quartz glass and articles made therefrom
Verre quartz dopé et des objets en produits

(30) Priorität: 07.12.1992 DE 4241152
(43) Veröffentlichungstag der Anmeldung: 15.06.1994
(73) Patentinhaber: Patent-Treuhand-Gesellschaft für elektrische Glühlampen mbH, D-81543 München (DE)
(72) Erfinder: Weiss, Werner, Dr., D-86391 Stadtbergen (DE); Wagner, Gerhard, Dr., CH-3900 Brig (CH)

(56) Entgegenhaltungen:
- EP-A- 0 019 327
- EP-A- 0 032 763
- US-A- 3 113 855
- DATABASE WPI Section Ch, Week 8407, Derwent Publications Ltd., London, GB; Class L01, AN 84-040297 & JP-A-59 003 042 (TOSHIBA CERAMICS KK) 9. Januar 1984

## Beschreibung

Die Erfindung geht aus von einem dotierten Quarzglas entsprechend dem Oberbegriff des Anspruchs 1. Sie betrifft außerdem auch Gegenstände, die aus diesem Quarzglas hergestellt sind, beispielsweise Hüllkolben von minderbelasteten Lampen.

Es handelt sich bei dem erfindungsgemäßen Quarzglas um ein sogenanntes "weiches" Quarzglas. Darunter wird ein Quarzglas mit niedrigerer Viskosität als der von reinem Quarzglas verstanden. Denn für manche Anwendungszwecke ist zwar die sehr geringe thermische Ausdehnung von Quarzglas wünschenswert, ohne daß jedoch Wert auf eine hohe thermische Belastbarkeit gelegt wird, die immer mit einer hohen Viskosität verbunden ist. Der Vorteil der weichen Quarzgläser ist dabei, daß ihre Verarbeitung einfacher und energiesparender erfolgen kann als dies bei hochviskosen Quarzgläsern der Fall ist. Üblicherweise werden die Eigenschaften weicher Quarzgläser dadurch erzielt, daß das hochreine Quarzglas (Reinheit des Ausgangsmaterials 99,99 mol-% SiO₂) mit geringen Mengen von Alkalioxiden und Erdalkalioxiden sowie zusätzlichen Beimengungen von Al₂O₃, TiO₂ und/oder ZrO₂ dotiert wird (EP-PS 19 327). Mit einer ausgewogenen Mischung dieser Komponenten kann mittels einer geringen Beimengung (<0,5 mol-%) ein ähnliches Viskositätsverhalten erzielt werden, wie es das bekannte, erheblich höher dotierte Vycorglas zeigt, das neben Alkalioxiden 3 % B₂O₃, Rest SiO₂, enthält.

Es ist Aufgabe der Erfindung, ein Quarzglas mit geringer Viskosität bereitzustellen, das sich problemlos weiterverarbeiten läßt.

Diese Aufgabe wird durch die kennzeichnenden Merkmale des Anspruchs 1 gelöst. Besonders vorteilhafte Ausgestaltungen finden sich in den Unteransprüchen.

Der Nachteil des vorbekannten Quarzglases ist, daß Alkalioxide bei hohen Temperaturen der Glasschmelze zum Ausdampfen neigen, also beim Verarbeiten in der Flamme zäher werden. Ferner führen Alkalioxid-Gehalte bei bestimmten Anwendungen zu Problemen, z.B. wenn es auf hohe Reinheit oder elektrische Isolation ankommt. Beispielsweise können dadurch in Zusammenhang mit der Herstellung von Hüllgefäßen für Entladungslampen schädliche Verunreinigungen des Plasmas und bei hochbelasteten Glühlampen Querentladungen durch Alkali-Ionen-Ladungsträger auftreten.

Das erfindungsgemäße Quarzglas verwendet nur noch einen sehr geringen Anteil an Alkalioxiden, nämlich weniger als ein Drittel der restlichen Dotierstoffe. Insbesondere kann auf Alkalioxide ganz verzichtet werden. Ein derartiges Quarzglas zeigt sogar die besten Eigenschaften für die Herstellung von Lampen.

Überraschenderweise hat sich gezeigt, daß es auf die Kombination von Erdalkalioxiden (E.A.-Oxide) und Boroxid ankommt. Sowohl E.A.-Oxide als auch Boroxid setzen die Viskosität des Quarzglases herab. Der Vorteil der Kombination aus beiden Arten von Oxiden ist, daß das Boroxid der von den E.A.-Oxiden verursachten erhöhten Kristallisationsneigung des Quarzglases entgegenwirkt. Ein besonderer Vorteil wird dadurch erreicht, daß beide Komponenten als eine einzige Verbindung, also in einem stöchiometrischen Verhältnis, zugegeben werden, vorteilhaft als ein bzw. auch mehrere E.A.- Borate. Auf diese Weise lassen sich Überschüsse an freiem B₂O₃ vermeiden. Dadurch wird erreicht, daß bei der Herstellung keine Verluste an Dotiersubstanz durch Verdampfen von B₂O₃ auftreten können, was eine unerwünschte Erhöhung der Viskosität mit sich brächte. Die Kristallisationsbeständigkeit derartiger Gläser ist ähnlich der des vorbekannten dotierten Quarzglases.

Als besonders geeignet haben sich Borate des Calcium, Barium, Strontium und/oder Magnesium erwiesen. Vorteilhaft ist eine Gesamtdotiermenge von bis zu 0,8 Gew.-%. Größere Mengen sind wegen der zunehmenden Kristallisationsneigung weniger geeignet. Der Mindestgehalt beträgt 0,05 Gew.-%. Kleinere Mengen bewirken keine ausreichende Viskositätserniedrigung mehr.

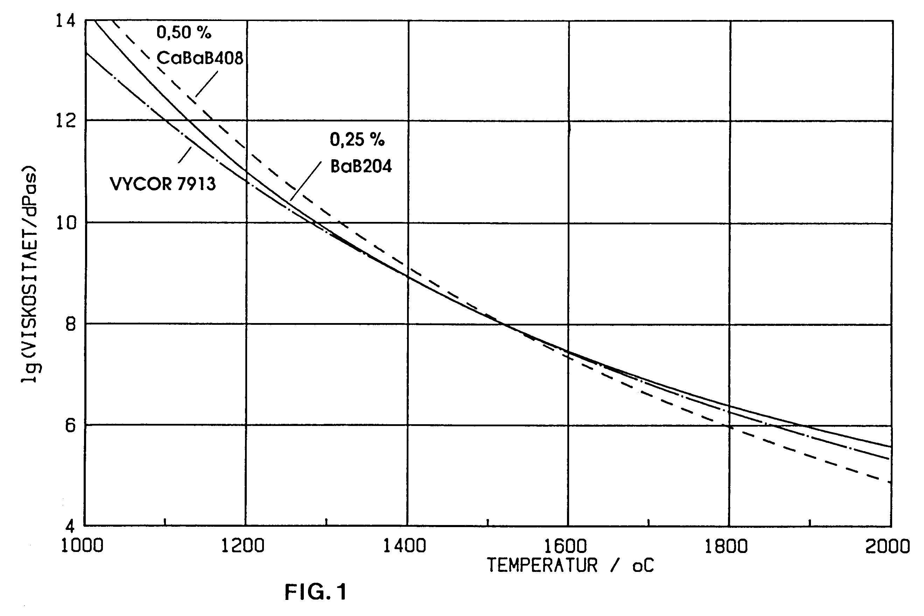

Zur besseren Verarbeitbarkeit des Quarzglases können auch andere Dotierstoffe in geringen Mengen (typisch 0,1 Gew.-% ) beigefügt sein, insbesondere Al₂O₃. Die Erfindung wird anhand mehrerer Ausführungsbeispiele näher erläutert. Es zeigen
- Figuren 1 bis 3: die Viskosität mehrerer dotierter Quarzglasschmelzen im Vergleich zur Viskosität von Vycor-Glas.

Die Eigenschaften mehrerer besonders bevorzugter Ausführungsbeispiele werden nachfolgend näher erläutert. In den Figuren ist der dekadische Logarithmus der Viskosität (in Dezi-Pascal-Sekunden (dPas)) als Funktion der Temperatur (in °C) für mehrere Gläser aufgetragen.

### Beispiel 1

Das Quarzglas besteht aus 0,25 % BaB₂O₄ (entsprechend einem oxidischen Aufbau BaO x B₂O₃), Rest SiO₂ mit einer Reinheit von 99,99 %. Dieses Glas (durchgezogene Kurve) ähnelt in bezug auf den Viskositätsverlauf sehr stark dem Vycorglas (strichpunktierte Kurve). Kristallisationen treten zwar auf, jedoch nur im Bereich 1200-1500 °C, der bei der Herstellung schnell durchfahren wird und somit nicht nachteilig für das Produkt ist. Wenn dieses Produkt der Hüllkolben einer Lampe (Glühlampe oder Entladungslampe) mit Temperaturen unter 1000 °C ist, so ist die Kristallisationsneigung für etliche 100 Stunden an Luft unterbunden. Der thermische Ausdehnungskoeffizient ist 0,6 x 10⁻⁶/K.

### Beispiel 2

Das Quarzglas besteht aus 0,5 % BaCaB₄O₈ (entsprechend einem oxidischen Aufbau BaO x CaO x 2B₂O₃), Rest SiO₂. Dieses Glas ist etwas "kürzer", wie Fig. 1 (gestrichelte Kurve) zeigt.

### Beispiel 3

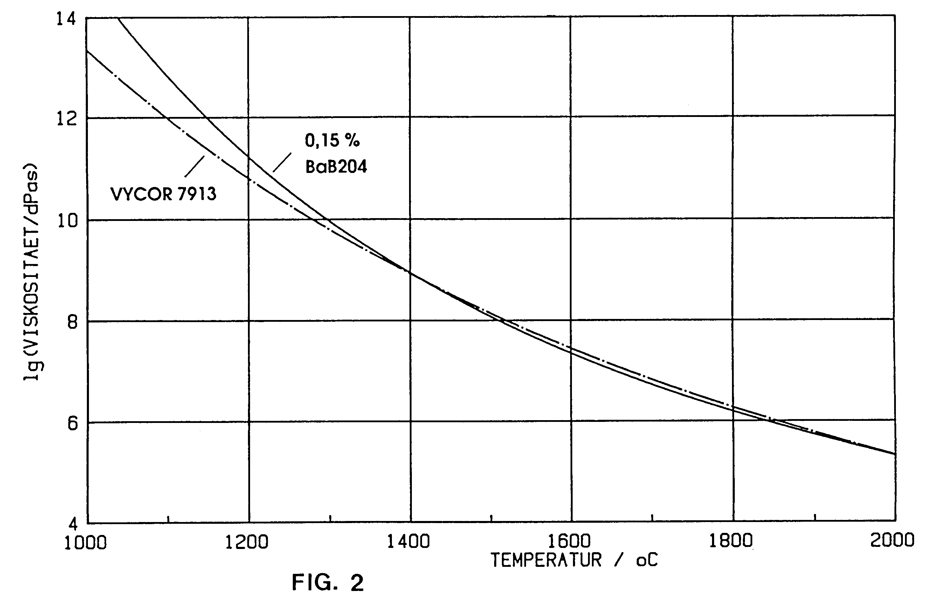

Das Quarzglas besteht aus 0,15 % BaB₂O₄ (oxidischer Aufbau BaO x B₂O₃), Rest SiO₂. Diese Dotierung bewirkt einen Viskositätsverlauf knapp oberhalb dem von Vycor, mit einer etwas höheren Entspannungstemperatur (Fig. 2). Beim Kristallisationsversuch zeigt das Glas eine nur sehr schwache Entglasung. Diese Kristallisationsneigung ist sogar geringer als bei Vycor.

### Beispiel 4

Außer dem Metaborat (Diborat) des Bariums (Beispiele 1 und 3) ist auch das Tetraborat BaB₄O₇ (oxidischer Aufbau BaO x 2B₂O₃) geeignet.

### Weitere Beispiele

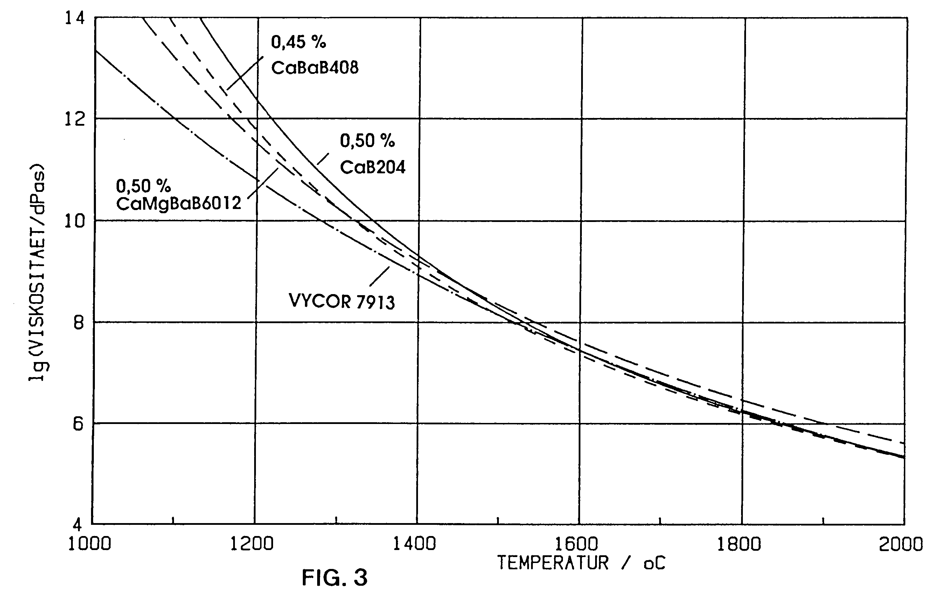

Geeignete Erdalkalioxide neben Bariumborat sind weiterhin vor allem Metaborate oder Tetraborate des Calciums, Strontiums, Magnesiums und deren Mischborate, insbesondere Mischborate mit Bariumborat entsprechend Beispiel 2. In Figur 3 sind die Viskositäten von weiteren besonders geeigneten dotierten Quarzglasschmelzen dargestellt. Im einzelnen beträgt der Dotierungsgehalt des Quarzglases dabei
- 0,50 % (CaO x MgO x BaO x 3B₂O₃)
- 0,45 % (CaO x BaO x 2B₂O₃)
- 0,50 % (CaO x B₂O₃)
Weitere Stoffe, die in geringen Mengen zugesetzt sein können, sind z.B. Al₂O₃ und Alkalioxide. Letztere jedoch in einer Gesamtmenge, die höchstens einem Drittel der Gesamtmenge an Erdalkalioxiden und Boroxid entspricht.

Hier beschriebene Gläser haben sich bis zu einer maximalen Einsatztemperatur von ca. 900 °C bewährt.

Das weiche Quarzglas enthält bevorzugt stöchiometrische Verbindungen von Erdalkalioxiden mit Boroxid in einer Gesamtmenge bis zu 0,8 Gew.-%. Eine bevorzugte Untergrenze ist 0,05 Gew.-%.

Grundsätzlich ist es aber auch möglich, als Ausgangsstoffe für die Dotierung nicht Borate, sondern die Oxide zu verwenden. Es empfiehlt sich dabei, die Einzelmengen stöchiometrisch aufeinander abzustimmen.

### Herstellung

Die Herstellung erfolgt in an sich bekannter Weise. Beispielsweise wird das in der EP-PS 19 327 beschriebene Verfahren angewendet. Die Gläser werden dabei in einer Wasserstoff/Helium-Atmosphäre erschmolzen, wobei als Quarzsand IOTA-Sand verwendet werden kann, dem die Borate zugemischt werden.

## Patentansprüche

1. Erdalkalioxid enthaltendes Quarzglas, dadurch gekennzeichnet, daß es als Dotierstoffe Erdalkalioxide und gleichzeitig Boroxid in einer Gesamtmenge zwischen 0,05 und 0,8 Gew.-% enthält.

2. Quarzglas nach Anspruch 1, dadurch gekennzeichnet, daß zumindest ein Teil dieser Dotierstoffe dem Quarzglas als Borate zugesetzt ist.

3. Quarzglas nach Anspruch 2, dadurch gekennzeichnet, daß das Quarzglas zwischen 0,05 und 0,8 Gew.-% Erdalkaliborate enthält.

4. Quarzglas nach Anspruch 2, dadurch gekennzeichnet, daß die Dotierstoffe als Meta- oder Tetraborate zugesetzt sind, also als stöchiometrisch zusammengesetzte chemische Verbindungen.

5. Quarzglas nach Anspruch 1, dadurch gekennzeichnet, daß die Reinheit des als Ausgangsstoff verwendeten Quarzpulvers 99,99 mol-% SiO₂ beträgt.

6. Quarzglas nach Anspruch 1, dadurch gekennzeichnet, daß als Erdalkalioxide BaO, SrO, CaO und/oder MgO verwendet werden.

7. Quarzglas nach Anspruch 1, dadurch gekennzeichnet, daß weitere Dotierstoffe zugesetzt sind.

8. Gegenstände, die völlig oder teilweise aus einem Quarzglas entsprechend einem der vorhergehenden Ansprüche hergestellt sind.

## Claims

1. Quartz glass containing alkaline earth metal oxide, characterized in that it contains as dopants alkaline earth metal oxides and simultaneously boron oxide in a total quantity of between 0.05 and 0.8% by weight.

2. Quartz glass according to Claim 1, characterized in that at least a part of these dopants is added to the quartz glass as borates.

3. Quartz glass according to Claim 2, characterized in that the quartz glass contains between 0.05 and 0.8% by weight of alkaline earth metal borates.

4. Quartz glass according to Claim 2, characterized in that the dopants are added as meta- or tetraborates, that is to say as chemical compounds of stoichiometric composition.

5. Quartz glass according to Claim 1, characterized in that the purity of the quartz powder used as starting material is 99.99 mol% SiO₂.

6. Quartz glass according to Claim 1, characterized in that BaO, SrO, CaO and/or MgO are used as alkaline earth metal oxides.

7. Quartz glass according to Claim 1, characterized in that further dopants are added.

8. Objects which are completely or partly produced from a quartz glass according to one of the preceding claims.

## Revendications

1. Verre quartzeux contenant un oxyde alcalino-terreux, caractérisé par le fait qu'il contient, comme substances dopantes, des oxydes alcalino-terreux et simultanément de l'oxyde de bore en une quantité totale comprise entre 0,05 et 0,8 % en poids.

2. Verre quartzeux suivant la revendication 1, caractérisé par le fait qu'au moins une partie de ces substances dopantes est ajoutée sous forme de borates au verre quartzeux.

3. Verre quartzeux suivant la revendication 2, caractérisé par le fait que le verre quartzeux contient entre 0,05 et 0,8 % en poids de borates alcalino-terreux.

4. Verre quartzeux suivant la revendication 2, caractérisé par le fait que les substances dopantes sont ajoutées sous la forme de métaborates ou de tétraborates, c'est-à-dire sous la forme de composés chimiques à composition stoéchiométrique.

5. Verre quartzeux suivant la revendication 1, caractérisé par le fait que la pureté de la poudre de quartz utilisée comme matériau de départ est égale à 99,99 % en moles de SiO₂.

6. Verre quartzeux suivant la revendication 1, caractérisé par le fait qu'on utilise du BaO, SrO, CaO et/ou MgO comme oxydes alcalino-terreux.

7. Verre quartzeux suivant la revendication 1, caractérisé par le fait qu'on ajoute d'autres substances dopantes.

8. Objets, qui sont fabriqués en totalité ou en partie en un verre quartzeux selon l'une des revendications précédentes.
